# EUROPÄISCHE PATENTSCHRIFT

(11) **EP 0 468 146 B1**
(45) Veröffentlichungstag und Bekanntmachung des Hinweises auf die Patenterteilung: **10.01.1996**
(21) Anmeldenummer: 91107080.3
(22) Anmeldetag: 02.05.1991
(51) Int. Cl.: G06K 7/06, G06K 13/08

(54) **Vorrichtung zum Lesen und Beschreiben von Wertkarten**
Apparatus for reading/writing of credit cards
Dispositif de lecture et écriture de cartes de crédit

(30) Priorität: 23.07.1990 CH 2438/90
(43) Veröffentlichungstag der Anmeldung: 29.01.1992
(73) Patentinhaber: Landis & Gyr Technology Innovation AG, CH-6301 Zug (CH)
(72) Erfinder: Deneke, Bernd, W-6450 Hanau (DE)
(74) Vertreter: Müller, Hans-Jürgen, Dipl.-Ing.

(56) Entgegenhaltungen:
- EP-A- 0 230 674
- EP-A- 0 236 846
- EP-A- 0 254 316
- DE-U- 8 907 699
- FR-A- 2 599 530
- FR-A- 2 633 754

## Beschreibung

Die Erfindung bezieht sich auf eine Vorrichtung zum Lesen und Beschreiben von Wertkarten der im Oberbegriff des Anspruchs 1 genannten Art. DE-U-8.907.699 beschreibt eine Vorrichtung dieser Art.

Es ist eine weitere Vorrichtung bekannt (DE-OS 3 916 812), bei der eine Kartenaufnahme in einem Gehäuse verschiebbar angeordnet ist. In einer ersten Endstellung kann eine Wertkarte durch einen im Gehäuse angeordneten Einführschlitz in die Kartenaufnahme eingeschoben werden. Durch das manuelle Betätigen eines Drehschiebers wird die Kartenaufnahme in eine zweite Endstellung bewegt. Noch bevor die zweite Endstellung ganz erreicht ist, wird durch den Drehschieber einerseits der Einführschlitz verschlossen und andererseits wird ein Kontaktträger derart bewegt, dass die darauf angeordneten Kontaktelemente mit den Kontaktbahnen der Wertkarte verbunden werden.

Es ist eine weitere Vorrichtung bekannt (DE-OS 3 916 783), bei der in einem Gehäuse eine Schublade angeordnet ist, die von einer ersten Endstellung manuell in eine zweite Endstellung verschiebbar ist. In der ersten Endstellung kann eine Wertkarte in die Schublade eingelegt werden. In der zweiten Endstellung ist die Wertkarte für den Benutzer unerreichbar an eine Lese- und Schreibvorrichtung angeschlossen. Noch bevor die Schublade die zweite Endstellung ganz erreicht hat, wird durch die Schublade ein Kontaktträger derart bewegt, dass die darauf angeordneten Kontaktelemente mit den Kontaktbahnen der Wertkarte verbunden werden.

Der Erfindung liegt die Aufgabe zugrunde, einen Kartenleser für Wertkarten zu schaffen, bei dem betrügerische Manipulationen und die Zerstörung durch Vandalenakte weitgehend verunmöglicht sind und der einfach und kostengünstig aufgebaut sein soll.

Die Erfindung besteht in den im Kennzeichen des Anspruchs 1 angegebenen Merkmalen. Vorteilhafte Ausgestaltungen ergeben sich aus den Unteransprüchen.

Nachfolgend werden Ausführungsbeispiele der Erfindung anhand der zeichnung näher erläutert.
Es zeigen:
- Fig. 1: eine Seitenansicht der Vorrichtung in der zum Einlegen und Entnehmen von Wertkarten geeigneten Stellung,
- Fig. 2: eine Seitenansicht der Vorrichtung in der Stellung, in der die Wertkarte gelesen und beschrieben werden kann,
- Fig. 3: eine Hebelanordnung,
- Fig. 4: eine Vorrichtung nach der Fig. 2 mit einer zusätzlichen elektromagnetischen Auslösevorrichtung,
- Fig. 5: eine zweite Ausführungsform der Vorrichtung,
- Fig. 6: eine Steuerung einer Klappe,
- Fig. 7: eine zweite Steuerung einer Klappe und
- Fig. 8: eine Ausführungsform einer Kontaktierungsvorrichtung.

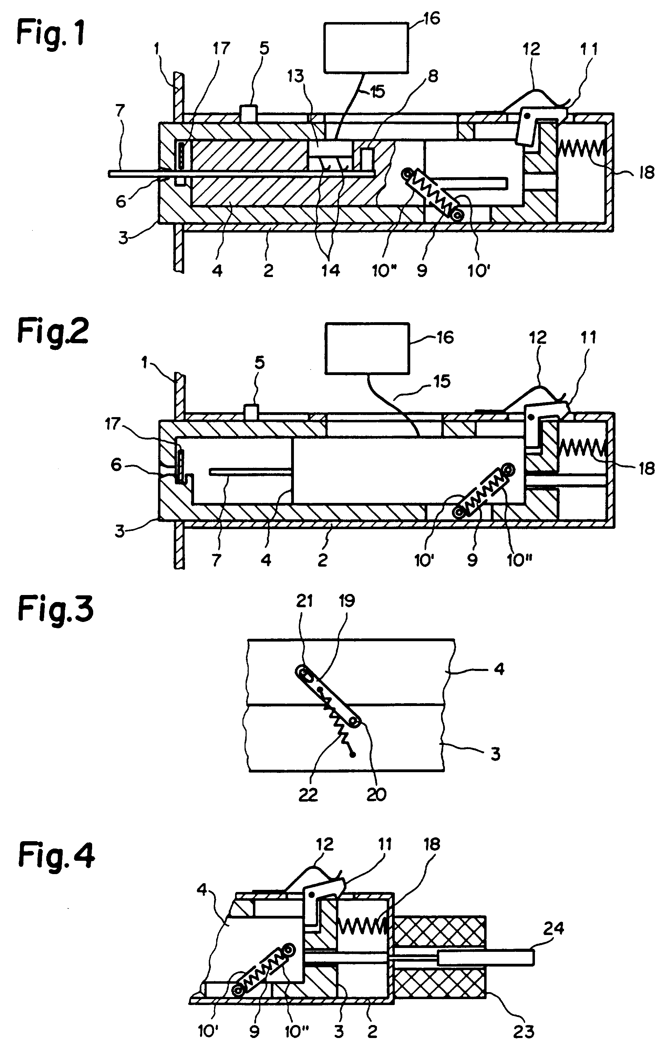

In den Fig. 1 und 2 bedeutet 1 eine Frontplatte einer Vorrichtung zum Lesen und Beschreiben von Wertkarten. An die Frontplatte 1 schliesst ein Gehäuse 2 an, das als Führung für einen Schlitten 3 dient, der längsverschiebbar ist. Im Schlitten 3 ist eine Kartenaufnahme 4 angeordnet, die ebenfalls längsverschiebbar ist, und zwar von einer ersten Endstellung (Fig. 1) in eine zweite Endstellung (Fig. 2). Ein am Schlitten 3 fest angeordneter Zapfen 5 greift in einen im Gehäuse 2 angeordneten Schlitz ein und begrenzt den Weg, auf dem der Schlitten 3 in der Längsrichtung verschoben werden kann. Auf der vorderen Stirnseite des Schlittens 3, d. h. auf derjenigen Seite, die aus der Frontplatte 1 herausragt, ist ein Einführschlitz 6 für Wertkarten 7, die beispielsweise einen elektronischen Schaltkreis enthalten, angeordnet. Die Wertkarte 7 ist in der Kartenaufnahme 4 allseitig geführt, wobei ein Anschlag die Einführtiefe der Wertkarte 7 begrenzt. Eine Klemmvorrichtung 8, beispielsweise eine Feder, hält die Wertkarte 7 mit einer vorbestimmten Kraft in der Kartenaufnahme 4 fest. Eine Druckfeder 9 ist beidseitig bis zu etwa einem Drittel ihrer Länge in je einer Hülse 10', 10" geführt und drückt jeweils auf den Boden dieser Hülsen 10', 10". Die Hülsen 10', 10" dienen einerseits als Führung für die Druckfeder 9 und verhindern andererseits ein seitliches Ausknicken der Druckfeder 9. Die Hülse 10' ist gelenkig an einem unteren Lagerpunkt im Schlitten 3 und die Hülse 10" ebenfalls gelenkig an einem oberen Lagerpunkt in der Kartenaufnahme 4 befestigt. Beispielsweise kann am Boden der Hülsen 10', 10" eine Oese angeordnet sein, in die je ein Stift eingreift, die in der Kartenaufnahme 4 beziehungsweise im Schlitten 3 angeordnet sind. In der ersten Endstellung drückt die Druckfeder 9 die Kartenaufnahme 4 nach vorne, d. h. in der Richtung der Frontplatte 1, und in der zweiten Endstellung nach hinten, d. h. von der Frontplatte 1 weg. Die Druckfeder 9 ist also so zwischen dem bewegbaren Schlitten 3 und der zu diesem beweglichen Kartenaufnahme 4 angeordnet, dass ein bistabiler Schnappmechanismus entsteht. Eine Klinke 11, die drehbar am Gehäuse 2 angeordnet ist, wird von einer Blattfeder 12 nach unten, d. h. gegen den Schlitten 3 gedrückt und hält diesen in der ersten Endstellung fest. Die Klinke 11 ist derart ausgebildet, dass sie in der zweiten Endstellung von der Kartenaufnahme 4 angehoben wird und dabei den Schlitten 3 freigibt.

In der Kartenaufnahme 4 ist eine Kontaktierungsvorrichtung 13 mit Kontaktfedern 14 angeordnet. Die Kontaktfedern 14 sind mit einem flexiblen Kabel 15, beispielsweise mit einem mehradrigen Bandkabel, mit einem Steuergerät 16 verbunden. Das Steuergerät 16 enthält alle Schaltkreise, die für die Ueberwachung der Vorrichtung und für das Lesen und Beschreiben von Wertkarten 7 notwendig sind.

Eine hinter dem Einführschlitz 6 angeordnete Klappe 17 gibt den Einführschlitz 6 in der ersten Endstellung frei und verschliesst ihn in der zweiten Endstellung. Eine Feder 18 ist zwischen dem Gehäuse 2 und dem Schlitten 3 angeordnet und drückt den Schlitten 3 nach vorne.

In der ersten Endstellung ist die Vorrichtung zur Annahme einer Wertkarte 7 bereit. Die Kartenaufnahme 4 ist ganz nach vorne, d. h. zur Frontplatte 1 hin verschoben. Die Klappe 17 ist offen, d. h. sie gibt den Einführschlitz 6 frei. Eine Wertkarte 7 kann durch den Einführschlitz 6 in die Kartenaufnahme 4 eingeschoben werden. Noch bevor die Wertkarte 7 vollständig eingeschoben ist, kommt sie mit den Kontaktfedern 14 und mit der Klemmvorrichtung 8 in Kontakt. Beim weiteren Einschieben der Wertkarte 7 wird die Kartenaufnahme 4 in der Einschubrichtung der Wertkarte 7 entgegen der Kraft der Druckfeder 9 mitbewegt. Die Druckfeder 9 wird durch diesen Vorgang zusammengepresst und sie dreht sich um den im Schlitten 3 angeordneten Lagerpunkt. Kurz bevor die Wertkarte 7 ganz in den Einführschlitz 6 eingeschoben ist, überschreitet die Druckfeder 9 einen Totpunkt. Die in der Druckfeder 9 gespeicherte Energie bewegt jetzt die Kartenaufnahme 4 schlagartig in die zweite Endstellung, wobei die Wertkarte 7 dadurch, dass sie in der Klemmvorrichtung 8 gehalten ist, mitgenommen wird. Die Wertkarte 7 wird somit in das Innere der Vorrichtung gezogen, wo sie für den Benutzer unzugänglich ist. Kurz bevor die zweite Endstellung ganz erreicht ist, verschliesst die Klappe 17 den Einführschlitz 6.

In der zweiten Endstellung ist die Klinke 11 durch die Kartenaufnahme 4 angehoben, der Schlitten 3 ist somit freigegeben. Der Schlitten 3 kann jetzt manuell entgegen der Kraft der Druckfeder 9 und der Feder 18 nach hinten verschoben werden. Da sich die Kartenaufnahme 4 mit einem Anschlag am Gehäuse 2 abstützt, wird sie nicht mitbewegt. Der obere Lagerpunkt der Druckfeder 9 bleibt somit fest, währenddem sich der untere Lagerpunkt verschiebt. Sobald die Druckfeder 9 den Totpunkt überschritten hat, ändert sich die Wirkungsrichtung der Kraft der Druckfeder 9. Die Kartenaufnahme 4 wird in die erste Endstellung bewegt. Noch bevor diese ganz erreicht ist, öffnet sich die Klappe 17. Die Wertkarte 7 wird aus dem Einführschlitz 6 herausgestossen und kann der Vorrichtung entnommen werden.

Es sind also bistabile Mittel angeordnet, die in der ersten Endstellung eine Kraft auf die Kartenaufnahme 4 entgegen der Einschubrichtung der Wertkarte 7 ausüben, wobei die Kartenaufnahme 4 mit Hilfe einer eingeführten Wertkarte 7 verschoben werden kann. Die Mittel sind so ausgestaltet, dass sich die Wirkungsrichtung der Kraft umkehrt, sobald die Kartenaufnahme 4 einen Totpunkt überschritten hat, so dass sich die Kartenaufnahme 4 selbsttätig in die zweite Endstellung bewegt und dabei die Wertkarte 7 in das Innere der Vorrichtung zieht.

Eine solche Vorrichtung bietet den Vorteil, dass die Wertkarte 7 in das Innere der Vorrichtung gezogen wird, ohne dass dazu motorische Mittel notwendig sind. Die Wertkarte 7 ist somit dem Benutzer während dem Lese- und Schreibvorgang entzogen.

Als zusätzlicher Schutz gegen betrügerische Manipulationen kann der Einführschlitz durch die Klappe 17 verschlossen werden. Sowohl die Wertkarte 7 wie auch die Kontaktierungsvorrichtung 13 sind damit während des Lese- und Schreibvorganges für den Benutzer unzugänglich. Manipulationen in betrügerischer Absicht an der Wertkarte 7 oder an der Kontaktierungsvorrichtung 13 werden auf diese Art und Weise verunmöglicht.

Um zu verhindern, dass ein Lese- und Schreibvorgang dadurch unterbrochen wird, dass ein Ausstossvorgang ausgelöst wird, kann eine Arretierungsvorrichtung angeordnet sein, die den Schlitten 3 so lange blockiert, bis der Lese- und Schreibvorgang beendet ist.

Sind das Gehäuse 2, der Schlitten 3 und die Kartenaufnahme 4 nach unten offen ausgestaltet, so werden eingeführte Fremdkörper, die nicht dem Format der Wertkarte 7 entsprechen, nach unten ausgegeben. Damit ist ein Verstopfen der Vorrichtung erschwert.

Die Vorrichtung ist ausserdem robust aufgebaut, besteht aus wenigen Bestandteilen, benötigt keinen Antriebsmotor und ist dementsprechend kostengünstig. Sie ist universell verwendbar, d. h. anstelle der Kontaktierungsvorrichtung 13 kann auch eine entsprechende Lese- und Schreibvorrichtung für optisch oder magnetisch codierte Wertkarten eingesetzt werden.

In der Fig. 3 ist ein Hebel 19 gezeigt, der im Schlitten 3 in einer unteren Lagerstelle 20 drehbar gelagert ist. Ein an der Kartenaufnahme 4 angeordneter Mitnehmerstift 21 greift in einen im Hebel 19 angeordneten Schlitz ein. Eine Zugfeder 22 ist so zwischen dem Hebel 19 und dem Schlitten 3 angeordnet, dass sie in der ersten Endstellung eine Kraft entgegen dem Uhrzeigersinn und in der zweiten Endstellung eine Kraft im Uhrzeigersinn auf den Hebel 19 ausübt.

Der Hebel 19 ist also im Schlitten 3 und in der Kartenaufnahme 4 gelagert und die Zugfeder 22 ist derart zwischen dem Hebel 19 und dem Schlitten 3 angeordnet, dass ein bistabiler Kipphebelmechanismus entsteht.

Dieser Kipphebelmechanismus ist eine alternative Lösung zu der in der Fig. 1 gezeigten Lösung mit der Druckfeder 9. Die Funktion ist genau gleich, d. h. sobald durch das Verschieben der Kartenaufnahme 4 oder des Schlittens 3 ein Totpunkt überschritten ist, wird die Kartenaufnahme 4 schlagartig in die erste oder in die zweite Endstellung bewegt.

Dies ist eine besonders einfache, mit wenigen Bauteilen zu realisierende Lösung.

In der Fig. 4 ist ein Teil der Vorrichtung in der zweiten Endstellung dargestellt, gemäss der Fig. 2. Auf der hinteren Stirnseite, d. h. auf der von der Frontplatte 1 abgewandten Seite des Gehäuses 2, ist zusätzlich ein Elektromagnet 23 angeordnet. Der Elektromagnet 23 drückt in erregtem Zustand mit einem Stössel 24 auf die Kartenaufnahme 4.

Nach der Beendigung des Lese- und Schreibvorganges wird der Elektromagnet 23 vom Steuergerät 16 erregt. Der Stössel 24 bewegt darauf die Kartenaufnahme 4 aus der zweiten Endstellung bis über den Totpunkt der Druckfeder 9, so dass die Kartenaufnahme 4 selbsttätig in die erste Endstellung bewegt wird.

Bei dieser Lösung ist vorteilhaft, dass der Ausstoss der Wertkarte 7 aus der Vorrichtung sowohl manuell als auch automatisch ausgelöst werden kann. Beispielsweise wird nach der Beendigung eines Lese- und Schreibvorganges die Wertkarte 7 automatisch ausgestossen.

Ein weiterer Vorteil ergibt sich dadurch, dass bei Speisespannungsausfall die Wertkarte 7 nicht blockiert ist, sondern dass der Ausstoss der Wertkarte 7 manuell ausgelöst werden kann.

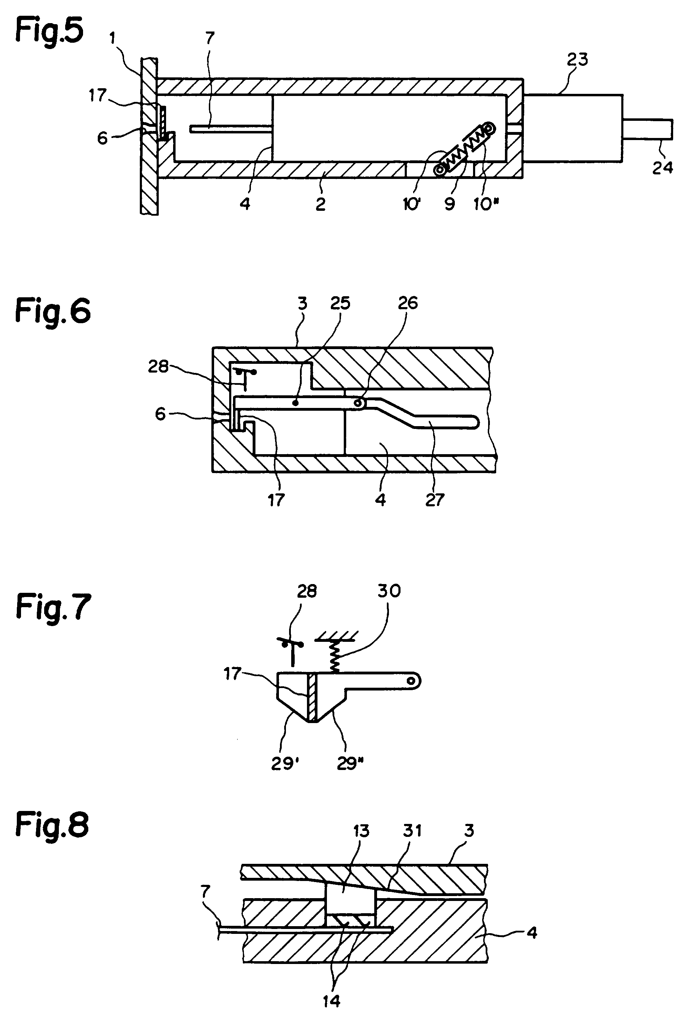

Bei der in der Fig. 5 gezeigten weiteren Ausführungsform der Vorrichtung ist die Wertkartenaufnahme 7 direkt im Gehäuse 2 geführt, es ist also kein Schlitten 3 (Fig. 1) vorhanden. Die Druckfeder 9 stützt sich einerseits auf das Gehäuse 2 ab und andererseits auf die Kartenaufnahme 4. Der am Gehäuse 2 angeflanschte Elektromagnet 23 drückt in erregtem Zustand mit dem Stössel 24 auf die Wertkartenaufnahme 7.

Bei dieser Ausführungsform kann der Ausstoss der Wertkarte 7 aus der Vorrichtung nur über den Elektromagneten 23 ausgelöst werden. Ein manuelles Auslösen des Ausstossvorganges ist nicht möglich.

Diese Lösung wird dort eingesetzt, wo ein manuelles Auslösen des Ausstossvorganges nicht notwendig ist. Es ergibt sich dadurch eine vereinfachte und damit kostengünstige Lösung.

In der Fig. 6 ist die Klappe 17 als U-förmiger Bügel ausgebildet, dessen beiden Arme in der Mitte je einen Zapfen 25 tragen, die im Schlitten 3 drehbar gelagert sind. Die Enden der beiden Arme sind als Mitnehmer 26 ausgebildet, die in zwei in den Seitenwänden der Kartenaufnahme 4 angeordneten Nuten 27 eingreifen. Die Nuten 27 sind aus drei Teilen zusammengesetzt. Zwei Teile verlaufen in der Bewegungsrichtung der Kartenaufnahme 4 und ein Verbindungsteil ist geneigt dazu angeordnet. Ein Schalter 28 ist derart angeordnet, dass er geschlossen ist, wenn die Klappe 17 den Einführschlitz 6 verschliesst. Er ist mit nicht gezeichneten Kabeln mit dem Steuergerät 16 verbunden.

Die Klappe 17 wird durch die Nuten 27 zwangsgeführt. In der ersten Endstellung der Kartenaufnahme 4 gibt die Klappe 17 den Einführschlitz 6 frei, in der zweiten Endstellung verschliesst die Klappe 17 den Einführschlitz 6.

Ist eine Wertkarte 7 durch Drähte oder dergleichen verlängert, dann wird dadurch die Klappe 17 blockiert. Der Schalter 28 bleibt offen. Der Lese- und Schreibvorgang wird darauf nicht freigegeben.

Betrugsversuche durch mit Drähte oder anderen Mitteln verlängerte Wertkarten 7 werden somit zuverlässig verhindert.

Es können weitere Schalter angeordnet sein, die beispielsweise die korrekte Lage der Wertkarte 7 überwachen. Diese weiteren Schalter sind mit einer UND-Funktion mit dem Schalter 28 verknüpft. Der Lese- und Schreibvorgang wird nur dann freigegeben, wenn alle Schalter in der richtigen Stellung sind.

Bei einer alternativen Ausführungsform gemäss der Fig. 7 ist die Klappe 17 als U-förmiger Bügel ausgebildet, dessen beide Arme mit den Enden im Schlitten 3 drehbar gelagert sind. Die Klappe 17 ist mit einer vorderen und einer hinteren Anlaufschräge 29', 29" für die Vorder- und die Hinterkante der Wertkarte 7 ausgebildet. Eine Feder 30 drückt die Klappe 17 nach unten, so dass der Einführschlitz 6 verschlossen ist. Der Schalter 28 überwacht die Stellung der Klappe 17.

Beim Einführen einer Wertkarte 7 in den Einführschlitz 6 drückt die Vorderkante der Wertkarte 7 auf die vordere Anlaufschräge 29' der Klappe 17. Der Winkel der Anlaufschräge 29' ist so gewählt, dass die Klappe 17 durch den Druck der Wertkarte 7 geöffnet wird. Nach dem vollständigen Einführen der Wertkarte 7 in die Vorrichtung schliesst die Klappe 17. Falls die Wertkarte 7 durch Drähte oder dergleichen verlängert worden ist, kann die Klappe 17 nicht vollständig schliessen. Der Schalter zur Ueberwachung der Klappe bleibt somit offen und die Steuereinrichtung blockiert den Schreib- und Lesevorgang.

Beim Ausgeben der Wertkarte 7 drückt die Hinterkante der Wertkarte 7 auf die hintere Anlaufschräge 29" der Klappe 17, die dadurch geöffnet wird. Nach dem Herausnehmen der Wertkarte 7 aus der Vorrichtung schliesst die Klappe 17 wieder.

Die beiden Anlaufschrägen 29', 29" sind also derart ausgebildet, dass der Druck der Vorderkante bzw. der Hinterkante der Wertkarte auf die jeweilige Anlaufschräge 29', 29" die Klappe 17 öffnet.

Bei dieser Lösung ist vorteilhafterweise der Einführschlitz 6 auch in der ersten Endstellung verschlossen. Das Eindringen von Staub in die Vorrichtung und damit verbundene Störungen werden somit vermieden.

In der Fig. 8 ist die Kontaktierungsvorrichtung 13 in einer Aussparung der Kartenaufnahme 4 derart eingelegt, dass sie in der Bewegungsrichtung der Kartenaufnahme 4 von dieser mitgenommen wird, in senkrechter Richtung zur Bewegungsrichtung aber verschiebbar ist. Die Kontaktierungsvorrichtung 13 wird von einer nicht gezeichneten Feder gegen eine im Schlitten 3 angeordnete geneigte Fläche 31 gepresst, die so ausgebildet ist, dass die Kontaktierungsvorrichtung 13 in der ersten Endstellung von der Wertkarte 7 abgehoben und in der zweiten Endstellung mit der Wertkarte 7 in Verbindung ist.

Beim Verschieben der Kartenaufnahme 4 von der ersten in die zweite Endstellung gleitet die Kontaktierungsvorrichtung 13 entlang der geneigten Fläche 31. Sie wird entgegen der Federkraft gegen die Wertkarte 7 bewegt. Kurz bevor die zweite Endstellung erreicht ist, setzen die Kontaktfedern 14 auf den Kontaktflächen der Wertkarte 5 auf.

Dadurch, dass die Kontaktfedern 14 erst kurz vor dem Erreichen der zweiten Endstellung mit den Kontaktflächen der Wertkarte 7 in Berührung kommen, werden sowohl die Kontaktfedern 14 als auch die Kontaktflächen auf der Wertkarte 7 geschont. Damit wird die Lebensdauer sowohl der Vorrichtung als auch der Wertkarte 7 verlängert. Dadurch, dass die Kontaktfedern 14 nicht über die Wertkarte 7 gleiten, wird auch ein Zerkratzen der Wertkarte 7 vermieden.

Als vorteilhafte Weiterbildung können die Kontaktfedern 14 als schräggeneigte Blattfedern ausgebildet sein, die nach der ersten Berührung mit der Wertkarte 7 durchgebogen werden und dabei eine Relativbewegung zur Wertkarte 7 machen. Schmutzteile auf der Kontaktierungsfläche der Wertkarte 7 werden dadurch zur Seite geschoben und allfällige Oxydschichten auf der Kontaktierungsfläche werden aufgebrochen. Eine sichere Kontaktierung ist damit möglich.

Bei einer vorteilhaften Weiterbildung ist auch die Klemmvorrichtung 8 für die Wertkarten 7 in die Kontaktierungsvorrichtung 13 integriert, und zwar derart, dass die Wertkarte 7 erst während dem Verschieben von der ersten in die zweite Endstellung geklemmt wird.

In der ersten Endstellung ist dann eine Wertkarte 7 in die Vorrichtung einschieb- oder entnehmbar, ohne dass eine Klemmkraft der Klemmvorrichtung 8 überwunden werden muss.

Die beschriebene Vorrichtung zum Lesen und Beschreiben von Wertkarten bietet einige Vorteile. Sie ist vom Benutzer einfach zu bedienen. Das Einführen der Wertkarte 7 in die Kartenaufnahme 4 und das Verschieben derselben von der ersten Endstellung in die zweite Endstellung geschieht im gleichen Bewegungsablauf, also sozusagen automatisch. Die Wertkarten 7 sind während dem Lese- und Schreibvorgang dem Benutzer unzugänglich. Betrugsversuche werden somit erschwert. Die Kontaktierungsvorrichtung 13 ist so ausgebildet, dass sowohl die Kontaktfedern 14 als auch die Wertkarte 7 geschont werden. Ein Lese- und Schreibvorgang wird erst dann freigegeben, wenn verschiedene Bedingungen erfüllt sind. Nach der Beendigung des Lese- und Schreibvorganges wird die Wertkarte 7 automatisch aus dem Einführschlitz 6 ausgegeben, ohne dass dazu ein motorischer Antrieb notwendig wäre. Trotz dieser vorteilhaften Ausbildungen ist die Vorrichtung einfach und robust aufgebaut. Sie ist daher kostengünstig sowohl in der Herstellung als auch im Betrieb.

## Patentansprüche

1. Vorrichtung zum Lesen und Beschreiben von Wertkarten (7), mit einer manuell mit Hilfe einer eingeführten Wertkarte (7) verschiebbaren Kartenaufnahme (4), die in einem Gehäuse (2) geführt ist und die zwei Endstellungen aufweist, wobei in der ersten Endstellung die Wertkarte (7) in die Kartenaufnahme (4) eingeführt und entnommen werden kann und in der zweiten Endstellung die Wertkarte (7) einerseits für den Benutzer unzugänglich ist und andererseits durch eine Lese- und Schreibeinrichtung (16) les- und beschreibbar ist, wobei ein Mittel (9; 19, 22) angeordnet ist, das in der ersten Endstellung eine Kraft auf die Kartenaufnahme (4) entgegen der Einschubrichtung der Wertkarte (7) ausübt, dadurch gekennzeichnet, dass das Mittel (9; 19, 22) bistabil ist und die Wirkungsrichtung der Kraft umkehrt, sobald die Kartenaufnahme (4) einen Totpunkt überschritten hat, so dass die Kartenaufnahme (4) vom Mittel in die zweite Endstellung bewegt wird und dabei die Wertkarte (7) in das Innere der Vorrichtung zieht.

2. Vorrichtung nach Anspruch 1, dadurch gekennzeichnet, dass ein Schlitten (3) angeordnet ist, der längsverschiebbar ist, und dass im Schlitten (3) die Kartenaufnahme (4) angeordnet ist, die ebenfalls längsverschiebbar ist.

3. Vorrichtung nach Anspruch 2, dadurch gekennzeichnet, dass das Mittel eine Druckfeder (9) ist, die zwischen dem bewegbaren Schlitten (3) und der zu diesem beweglichen Kartenaufnahme (4) derart angeordnet ist, dass ein bistabiler Schnappmechanismus entsteht.

4. Vorrichtung nach Anspruch 2, dadurch gekennzeichnet, dass das Mittel ein Hebel (19) ist, der im bewegbaren Schlitten (3) und in der zu diesem beweglichen Kartenaufnahme (4) gelagert ist, und dass eine Zugfeder (22) derart zwischen dem Hebel (19) und dem Schlitten (3) angeordnet ist, dass ein bistabiler Schnappmechanismus entsteht.

5. Vorrichtung nach einem der Ansprüche 2 bis 4, dadurch gekennzeichnet, dass eine Klinke (11) angeordnet ist, die den Schlitten (3) in der ersten Endstellung festhält und die so ausgebildet ist, dass sie in der zweiten Endstellung von der Kartenaufnahme (4) angehoben wird und dabei den Schlitten (3) freigibt.

6. Vorrichtung nach einem der Ansprüche 2 bis 5, dadurch gekennzeichnet, dass eine Klappe (17) als U-förmiger Bügel ausgebildet ist, dessen beiden Arme im Schlitten (3) drehbar gelagert sind, und dass die Enden der beiden Arme als Mitnehmer (26) ausgebildet sind, die in zwei in der Kartenaufnahme (4) angeordnete Nuten (27) eingreifen, die derart ausgebildet sind, dass die Klappe (17) in der ersten Endstellung einen Einführschlitz (6) freigibt und ihn in der zweiten Endstellung verschliesst.

7. Vorrichtung nach einem der Ansprüche 2 bis 5, dadurch gekennzeichnet, dass eine Klappe (17) als U-förmiger Bügel ausgebildet ist, dessen beiden Arme im Schlitten (3) drehbar gelagert sind, und dass an der Klappe (17) eine vordere und eine hintere Anlaufschräge (29', 29") angeordnet sind, die derart ausgebildet sind, dass der Druck der Vorderkante bzw. der Hinterkante der Wertkarte (7) auf die jeweilige Anlaufschräge (29', 29") die Klappe (17) öffnet.

8. Vorrichtung nach einem der vorangehenden Ansprüche, dadurch gekennzeichnet, dass eine Kontaktierungsvorrichtung (13) in der Kartenaufnahme (4) derart geführt ist, dass sie in der Bewegungsrichtung der Kartenaufnahme (4) von dieser mitgenommen wird, in senkrechter Richtung zur Bewegungsrichtung aber verschiebbar ist, und dass die Kontaktierungsvorrichtung (13) durch Federkraft gegen eine geneigte Fläche (31) gepresst wird, die so ausgebildet ist, dass die Kontaktierungsvorrichtung (13) in der ersten Endstellung von der Wertkarte (7) abgehoben und in der zweiten Endstellung mit der Wertkarte (7) in Verbindung ist.

9. Vorrichtung nach einem der vorangehenden Ansprüche, dadurch gekennzeichnet, dass ein Elektromagnet (23) angeordnet ist, der in erregtem Zustand mit einem Stössel (24) auf die Kartenaufnahme (4) drückt und diese aus der zweiten Endstellung derart über einen Totpunkt des bistabilen Mittels (9; 19, 22) verschiebt, dass die Kartenaufnahme (4) selbsttätig in die erste Endstellung bewegt wird.

## Claims

1. Device for reading and writing of credit cards (7) with a card receiver (4) manually displaceable by means of an inserted credit card (7), which is guided in a housing and which has two end positions, wherein in the first end position the credit card (7) can be inserted into and removed from the card receiver (4) and in the second end position the credit card (7) is on the one hand inaccessible to the user and on the other hand can be read from and written onto by a reading and writing apparatus (16), wherein a means (9; 19, 22) is provided which, in the first end position, exerts a force upon the card receiver (4) counter to the direction of insertion of the credit card (7), characterised in that the means (9; 19; 22) is bistable and reverses the direction of the effect of the force as soon as the card receiver (4) has passed a dead centre, so that the card receiver (4) is moved by the means into the second end position and thereby draws the credit card (7) into the interior of the device.

2. Device according to claim 1, characterised in that a carriage (3) is provided which is longitudinally displaceable, and that the card receiver (4), which is also longitudinally displaceable, is arranged in the carriage (3).

3. Device according to claim 2, characterised in that the means is a compression spring (9) which is arranged between the displaceable carriage (3) and the card receiver (4) which is displaceable with respect thereto, such that a bistable snap-action mechanism is created.

4. Device according to claim 2, characterised in that the means is a lever (19) which is mounted in the displaceable carriage (3) and in the card receiver (4) which is displaceable with respect thereto, and that a tension spring (22) is arranged between the lever (19) and the carriage (3) such that a bistable snap-action mechanism is created.

5. Device according to one of claims 2 to 4, characterised in that a pawl (11) is provided which holds the carriage (3) in the first end position, and which is configured so that in the second end position it is lifted from the card receiver (4) and thereby releases the carriage (3).

6. Device according to one of claims 2 to 5, characterised in that a flap (17) is configured as a U-shaped clip, the two arms of which are rotatably mounted in the carriage (3), and that the ends of the two arms are configured as catches (26) which engage with two grooves (27) arranged in the card receiver (4), which are configured so that in the first end position the flap (17) opens an insertion slit (6) and closes it in the second end position.

7. Device according to one of claims 2 to 5, characterised in that a flap (17) is configured as a U-shaped clip, the two arms of which are rotatably mounted in the carriage (3), and that a front and a rear inclined stop face (29', 29") are arranged on the flap (17) which are configured such that the pressure of the front edge or respectively of the back edge of the credit card (7) on the respective inclined stop face (29', 29") opens the flap (17).

8. Device according to one of the preceding claims, characterised in that a contacting device (13) is guided in the card receiver (4) such that it is carried along by the card receiver (4), in the direction of movement thereof, but is displaceable in a direction perpendicular to the direction of movement, and that the contacting device (13) is pressed by spring force against an inclined surface (31), which is configured such that in the first end position the contacting device (13) is lifted off the credit card (7) and in the second end position is in contact with the credit card (7).

9. Device according to one of the preceding claims, characterised in that an electromagnet (23) is provided which when excited presses onto the card receiver (4) by means of a plunger (24) and moves it from the second end position over a dead centre of the bistable means (9; 19, 22) such that the card receiver (4) is automatically moved into the first end position.

## Revendications

1. Dispositif pour exécuter une lecture et un enregistrement sur des cartes de crédit (7), comportant un logement à carte (4) déplaçable manuellement à l'aide d'une carte de crédit insérée (7) et qui est guidé dans un boîtier (2) et possède deux positions d'extrémité, et dans lequel, dans la première position d'extrémité, la carte de crédit (7) peut être insérée dans le logement à carte (4) et peut en être retiré et, dans la seconde position d'extrémité, d'une part la carte de crédit (7) est inaccessible pour l'utilisateur et d'autre part une lecture et un enregistrement peuvent être exécuté sur la carte de crédit au moyen d'un dispositif de lecture et d'enregistrement (16), et dans lequel il est prévu des moyens (9;19, 22), qui, dans la première position d'extrémité, appliquent une force au logement à carte (4) à l'encontre de la direction d'insertion de la carte de crédit (7), caractérisé en ce que les moyens (9;19,22) sont bistables et que la direction d'action de la force s'inverse dès que le logement à carte (4) a franchi un point mort de sorte que le logement à carte (4) est déplacé par les moyens jusque dans la seconde position d'extrémité et tire la carte de crédit (7) à l'intérieur du dispositif.

2. Dispositif selon la revendication 1, caractérisé en ce qu'il est prévu un coulisseau (3) qui est déplaçable longitudinalement et que dans le coulisseau (3) est disposé le logement à carte (4), qui est également déplaçable longitudinalement.

3. Dispositif selon la revendication 2, caractérisé en ce que les moyens sont constitués par un ressort de pression (9), qui est disposé entre le coulisseau déplaçable (3) et le logement à carte (4) mobile par rapport au coulisseau, de telle sorte qu'on obtient un mécanisme bistable à déclic.

4. Dispositif selon la revendication 2, caractérisé en ce que les moyens sont constitués par un levier (19), qui est monté dans le coulisseau déplaçable (3) et dans le logement à carte (4) mobile par rapport à ce dernier, et qu'un ressort de traction (22) est disposé entre le levier (19) et le coulisseau (3) de telle sorte qu'on obtient un mécanisme bistable à déclic.

5. Dispositif selon l'une des revendications 2 à 4, caractérisé en ce qu'il est prévu un cliquet (11), qui maintient fermement le coulisseau (3) dans la première position d'extrémité et est agencé de telle sorte que dans la seconde position d'extrémité, il est écarté du logement à carte (4) et libère le coulisseau (3).

6. Dispositif selon l'une des revendications 2 à 5, caractérisé en ce qu'un volet (17) est réalisé sous la forme d'un étrier en forme de U, dont les deux bras sont montés de manière à pouvoir pivoter dans le coulisseau (3), et que les extrémités des deux bras sont réalisées sous la forme d'organes d'entraînement (26), qui s'engagent dans deux rainures (27) disposées dans le logement à carte (4) et qui sont agencés de telle sorte que dans la première position d'extrémité, le volet (17) libère une fente d'insertion (6) et, dans la seconde position d'extrémité, ferme cette fente.

7. Dispositif selon l'une des revendications 2 à 5, caractérisé en ce qu'un volet (17) est réalisé à la manière d'un étrier en forme de U, dont les deux bras sont montés de manière à pouvoir pivoter dans le coulisseau (3), et que sur le volet (17) sont prévus des rampes avant et arrière (29',29"), qui sont agencées de telle sorte que la pression du bord avant ou du bord arrière de la carte de crédit (7) sur la rampe respective (29',29") ouvre le volet (17).

8. Dispositif selon l'une des revendications précédentes, caractérisé en ce qu'un dispositif de contact (13) est guidé dans le logement à carte (4) de telle sorte qu'il est entraîné par le logement à carte (4) dans la direction de déplacement de ce dernier, mais est déplaçable dans une direction perpendiculaire à la direction de déplacement, que le dispositif de contact (13) est repoussé par la force d'un ressort contre une surface inclinée (31) agencée de telle sorte que dans la première position d'extrémité, le dispositif de contact (13) est écarté de la carte de crédit (7) et, dans la seconde position d'extrémité, est relié à la carte de crédit (7).

9. Dispositif selon l'une des revendications précédentes, caractérisé en ce qu'il est prévu un électroaimant (23) qui, à l'état excité, repousse par l'intermédiaire d'un poussoir (24) le logement à carte (4) et déplace ce dernier depuis la seconde position d'extrémité au-delà d'un point mort des moyens bistables (9;19,22) de telle sorte que le logement à carte (4) est amené automatiquement dans la première position d'extrémité.
